# EUROPEAN PATENT APPLICATION

(11) **EP 3 406 411 A1**
(43) Date of publication of application: **28.11.2018**
(21) Application number: 16886399.1
(22) Date of filing: 21.09.2016
(51) Int. Cl.: B29C 43/36, B29C 33/02, B29C 43/18, B29C 43/54, B29K 105/08

(54) **FIBER-REINFORCED COMPOSITE MEMBER MOLDING DEVICE AND FIBER-REINFORCED COMPOSITE MEMBER MOLDING METHOD**

(30) Priority: 20.01.2016 JP 2016008970
(71) Applicant: IHI Corporation, Tokyo 135-8710 (JP)
(72) Inventor: MURAKAMI, Tsutomu, Tokyo 135-8710 (JP); OBUCHI, Kenro, Tokyo 135-0061 (JP); TANAKA, Shinichi, Tokyo 135-0061 (JP)
(74) Representative: MERH-IP Matias Erny Reichl Hoffmann Patentanwälte PartG mbB
(86) International application number: PCT/JP2016/077847
(87) International publication number: WO 2017/126159

(57) **Abstract**

A fiber reinforced composite member molding apparatus 1 comprising a lower mold 2 with a cavity 21, an upper mold 3 with a core 31 for clamping layered prepreg P to the cavity 21, cartridge heaters 4 for heating the layered prepreg P via the lower mold 2 and the upper mold 3, and cooling medium passages 5 for cooling the layered prereg P via the lower mold 2 and the upper mold 3, the lower mold 2 and the upper mold 2 being brought nearer to each other according to shrinkage of thermoplastic resin contained in the layered prereg P during cooling, further comprises pins 11 moved into and out of the cavity 21, cylinders 13 for moving the pins 11 into and out of the cavity 21, and a controller 6 for causing the pins 11 to project into the cavity 21 to come into contact with and apply pressure to the layered prepreg P during cooling. The apparatus can mold a fiber reinforced composite member without producing delamination in a thicker end portion of the layered prepreg without an increase in molding time.

## Description

### Technical Field

The present disclosure relates to a fiber reinforced composite member molding apparatus and a fiber reinforced composite member molding method used to mold a fiber reinforced composite member from stacked sheets of prepreg formed of long carbon fibers impregnated with resin.

### Background Art

In molding a thermoplastic CFRP member (fiber reinforced composite member) from stacked sheets of prepreg formed of long carbon fibers impregnated with, for example thermoplastic resin as a matrix, a molding method using an autoclave is already established. Recently, as an alternative to the molding method using an autoclave, a mold hot press molding method using a molding apparatus is being developed.

When molding a fiber reinforced composite member using the mold hot press molding method, layered prepreg, or stacked sheets of prepreg are placed between a pair of molds in the molding apparatus, and heated to or above a melting temperature (curing temperature when the matrix resin is thermosetting resin) while pressure is applied to the layered prepreg with the thermoplastic resin melted, by the pair of molds.

After the application of pressure, the thermoplastic resin is cooled via the pair of molds to a temperature at which the resulting molded article does not experience damage or deformation by opening of the molds. The fiber reinforced composite member with a desired shape is obtained this way.

An example of background-art fiber reinforced composite member molding apparatus is disclosed in Patent Document 1. The disclosed molding apparatus includes heaters for heating a design surface of each of a pair of molds which is brought into contact with layered prepreg.

The heaters heat the design surface of each mold by heating air supplied from an air supply source with their heating portions and blowing the heated air to the back of the design surface. The heaters also function as coolers by blowing air to the back of the design surface of each mold with power supply to their heating portions stopped, thus without heating air.

In this fiber reinforced composite member molding apparatus, in cooling of the thermoplastic resin, as the thermoplastic resin shrinks, a volume of the space for accommodating the layered prepreg (cavity) is reduced by continuing application of pressure by the pair of molds.,

### Related Art Document

### Patent Document

Patent Document 1: US 2012/0267828 A1

### Summary of the Invention

### Problems to be solved by the Invention

If the layered prepreg is greater in thickness, or size in the direction in which the layers are piled, in an end portion than in the other part, the amount of shrinkage of the layered prepreg is greater in the end portion than in the other part. In the above-mentioned background-art fiber reinforced composite member molding apparatus, however, the pair of molds cannot be brought nearer to each other according to shrinkage in the thicker end portion of the layered prereg.

Thus, in the above-mentioned background-art molding apparatus, there is a possibility that during cooling after application of pressure, delamination occurs in the end portion, for example in the middle of thickness of the layered prepreg, such that the delamination spreads across a surplus portion (to be cut off by machining after molding) further into a portion to be included in a finished article.

A method of starting cooling of the layered prepreg in the thicker end portion, and after a certain time, starting cooling of the other part has been attempted. Although this method can prevent delamination in the end portion in the middle of thickness of the layered prepreg, starting cooling different portions at different times makes the molding time longer. The solution to this problem has been being sought for.

This disclosure is presented in view of the above problem with the background art. An object of this disclosure is to provide a fiber reinforced composite member molding apparatus and a fiber reinforced composite member molding method which can mold a fiber reinforced composite member without producing delamination in an end portion of layered prereg even when the layered prepreg is greater in thickness in the end portion than in the other part, and that without an increase in molding time.

### Means for Solving the Problems

The present disclosure discloses a fiber reinforced composite member molding apparatus for molding a fiber reinforced composite member, comprising a first mold with a cavity, a second mold for clamping layered prepreg including stacked sheets of prepreg formed of long carbon fibers impregnated with resin, to the cavity of the first mold and applying pressure to the layered prepreg, heat sources for heating the resin contained in the layered prepreg via the first and second molds, and a cooling mechanism for cooling the resin contained in the layered prepreg via the first and second molds after heating of the resin contained in the layered prepreg, the first and second molds being brought nearer to each other during cooling with the cooling mechanism, wherein the fiber reinforced composite member molding apparatus further comprises a pressure application device moved into and out of the cavity of the first mold to come into and out of contact with the layered prepreg, a pressure application device driver for moving the pressure application device into and out of the cavity of the first mold, and a controller for operating the pressure application device driver according to shrinkage of the resin contained in the layered prereg caused by cooling with the cooling mechanism to cause the pressure application device to project into the cavity of the first mold to come into contact with and apply pressure to the layered prepreg.

### Advantageous Effects of the Invention

The fiber reinforced composite member molding apparatus according to this disclosure produces an excellent effect, i.e., it can mold a fiber reinforced composite member without producing delamination in an end portion of layered prepreg even when the layered prepreg is greater in thickness in the end portion than in the other part, and that without an increase in molding time.

### Brief Description of the Drawings

FIG. 1 is an explanatory cross-sectional view showing an embodiment of fiber reinforced composite member molding apparatus according to this disclosure.
FIG. 2 is an explanatory side view showing the fiber reinforced composite member molding apparatus of FIG. 1 with a pressure application device driver omitted.
FIG. 3 is an explanatory cutaway plan fragmentary view showing a lower mold in the fiber reinforced composite member molding apparatus of FIG. 1.
FIG. 4 is an explanatory cutaway plan fragmentary view showing a lower mold in another embodiment of fiber reinforced composite member molding apparatus according to this disclosure.
FIG. 5 is an explanatory cross-sectional enlarged fragmentary view showing a lower mold in another embodiment of fiber reinforced composite member molding apparatus according to this disclosure.
FIG. 6A is an explanatory perspective view showing a variation of a sleeve used in the fiber reinforced composite member molding apparatus of FIG. 5.
FIG. 6B is an explanatory perspective view showing another variation of the sleeve used in the fiber reinforced composite member molding apparatus of FIG. 5.
FIG. 7 is an explanatory cross-sectional view showing another material composition from which to mold a fiber reinforced composite member with the fiber reinforced composite member molding apparatus according to this disclosure.

### Mode for carrying out the Invention

With reference to the accompanying drawings, an embodiment of fiber reinforced composite member molding apparatus according to this disclosure will be described below.

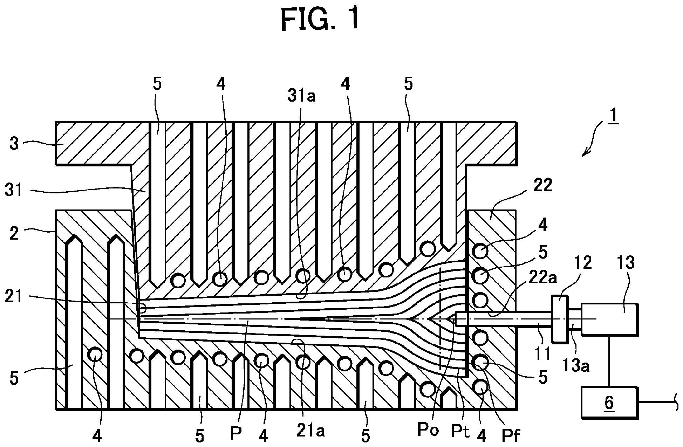

FIGS. 1 to 3 show an embodiment of fiber reinforced composite member molding apparatus according to this disclosure, wherein a fiber reinforced composite member to be molded is a composite fan blade.

The composite fan blade is molded from a plurality of sheets of prepreg formed of long carbon fibers impregnated with resin, stacked such that sheets with different fiber orientations form alternate layers, where the thickness formed by the layers is greater in a hub-side end portion (dovetail portion) than in a tip-side portion.

As shown in FIG. 1, the molding apparatus 1 for molding such composite fan blade comprises a lower mold (first mold) 2 and an upper mold (second mold) 3.

The lower mold 2 has a cavity 21. The upper mold 3, which comes nearer to and away from the lower mold 2 by moving up and down, has a core 31 which, in a clamped state, fits in the cavity 21 in the lower mold 2, thereby clamping the stacked sheets of prepreg, referred to as layered prepreg P (material to be molded into the composite fan blade), to the cavity 21.

The lower mold 2 comprises a plurality of cartridge heaters 4 as heat sources for heating corresponding regions of a molding surface 21a of the cavity 21 in contact with the layered prepreg P, thereby melting thermoplastic resin contained in the layered prepreg P. Also the upper mold 3 comprises a plurality of cartridge heaters 4 as heat sources for heating corresponding regions of a molding surface 31a of the core 31 in contact with the layered prepreg P. The heat source is not limited to the cartridge heater 4. For example, heating steam may be used as a heat source.

The molding apparatus 1 further comprises a plurality of cooling medium passages (cooling mechanism) 5 to cool the regions of the molding surface 21a of the cavity 21 of the lower mold 2 and the regions of the molding surface 31a of the core 31 of the upper mold 31, individually. The cooling medium passages 5 are arranged with their ends located at the back of each molding surface 21a, 31a to cool the molding surface 21a of the cavity 21 of the lower mold 2 and the molding surface 31a of the core 31 of the upper mold 3 uniformly in a cooling process after the thermoplastic resin in the layered prereg P is melted. The cooling media usable include cooled air, cooled water and cooled oil.

During cooling, the thermoplastic resin contained in the layered prepreg P shrinks. Thus, in the molding apparatus 1, the upper mold 3 is moved down to reduce the volume of the cavity 21 according to the shrinkage of the thermoplastic resin. The composite fan blade is molded this way.

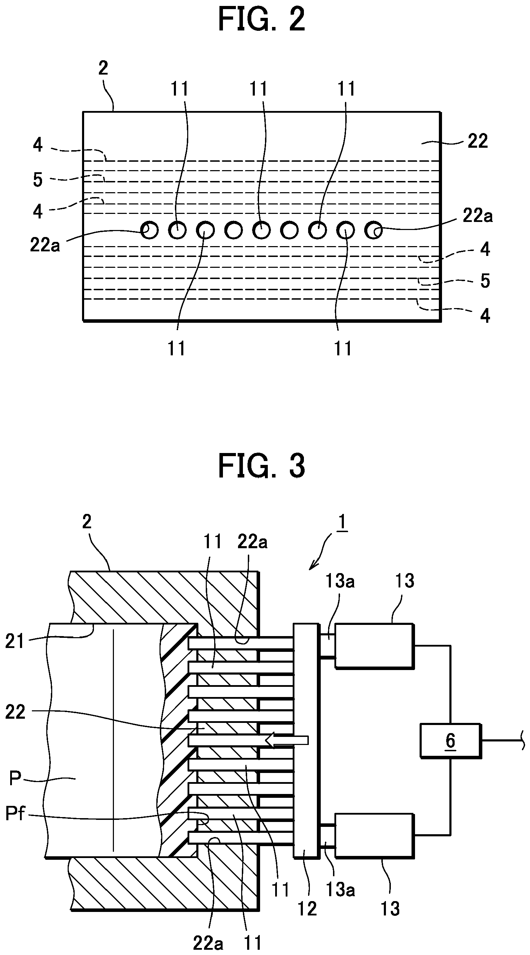

As shown in FIGS. 2 and 3, a cavity wall 22 of the cavity 21 of the lower mold 2 adjacent to the end portion (dovetail portion) Pt of the layered prepreg P has a plurality of insertion holes 22a arranged along the width of the cavity wall 22 (in the vertical direction in the diagram of FIG. 3), and pins (pressure application device) 11 to be moved into and out of the cavity 21 of the lower mold 2 are inserted in the insertion holes 22a.

The pins 11 each have a flat distal end and fixed to a pin support 12 at a proximal end. The pin support 12 is fixed to an end of a cylinder rod 13a in each of cylinders 13 (pressure application device driver). Driven by the cylinders 13, the pins 11 move into and out of the cavity 21 as an integrated whole, so that their distal ends come into and out of contact with the hub-side end portion (dovetail portion) Pt of the layered prepreg P in a region in which delamination is likely to occur. In this embodiment, the distal ends come into and out of contact with the end face Pf in the middle Po of the thickness of the layered prereg.

In the molding apparatus 1, the pins 11 are restrained as necessary not to project from the insertion holes 22a into the cavity 21 of the lower mold 2. When molding a fiber reinforced composite member from layered prepreg without a significant thickness difference over the whole, the pins 11 are restrained by the cylinders 13 not to project from the insertion holes 22a in the cavity wall 22.

The molding apparatus 1 further comprises a controller 6 which controls heating operation of the cartridge heaters 4 and supply of the cooling medium to the cooling medium passages 5. In the present embodiment, while the thermoplastic resin is cooled by the cooling medium supplied to the cooling passages 5, the controller 6 controls the cylinders 13 to cause the pins 11 to project into the cavity 21 of the lower mold 2 to come into contact with the end face Pf of the end portion Pt of the layered prepreg P and apply pressure to the end face Pf in the middle Po of the thickness of the layered prereg.

In the Figure, a circuit electrically connecting the cartridge heaters 4 to the controller 6 is omitted. Also a cooling medium supply source which constitutes a cooling mechanism with the cooling medium passages 5, and a circuit electrically connecting the cooling medium supply source to the controller 6 are omitted.

Next, a summary of how to mold a composite fan blade, namely fiber reinforced composite member with the molding apparatus 1 will be given.

First, in a mold open state, layered prepreg P, or stacked sheets of prepreg are set in the cavity 21 of the lower mold 2, and then the upper mold 3 is moved down to bring the two molds into a clamped state, wherein the layered prepreg P is clamped between the core 31 of the upper mold 3 and the cavity 21 of the lower mold 2.

Then, by controlling the heating operation of the cartridge heaters 4 provided as heat sources, the controller 6 heats the layered prepreg P to impart a viscosity (temperature) which is not so low (high) as allowing meandering of the long carbon fibers in each layer of the layered prereg P. Then, application of pressure to the layered prepreg P by the upper mold 3 and the lower mold 2 is started. The application of pressure is continued until the composite fan blade is molded and removed from the molds.

During the application of pressure, the controller 6 further heats the layered prepreg P to or above the melting temperature of the thermoplastic resin contained in the layered prepreg P by controlling the heating operation of the cartridge heaters 4.

A predetermined time after the thermoplastic resin contained in the layered prepreg P is melted, the controller 6 stops the heating operation of the cartridge heaters 4 and starts supply of the cooling medium to the cooling medium passages 5 to cool the thermoplastic resin via the upper mold 3 and the lower mold 2.

During cooling, the thermoplastic resin contained in the layered prepreg P shrinks, and the upper mold 3 continuing the application of pressure moves down according to the shrinkage of the thermoplastic resin, so that the volume of the cavity 21 of the lower mold 2 reduces.

Simultaneously, the controller 6 operates the cylinders 13 to cause the pins 11 to project into the cavity 21 of the lower mold 2, as indicated by an outline arrow in FIG. 3, so that the distal end faces of the pins 11 come into contact with and apply pressure to the end portion Pt of the layered prepreg P in a region in which delamination is likely to occur. In the present embodiment, they come into contact with and apply pressure to the end face Pf in the middle Po of the thickness of the layered prepreg. The molding of the composite fan blade is thus completed.

As described above, in the present embodiment of molding apparatus 1, while the thermoplastic resin is cooled by supplying the cooling medium to the cooling medium passages 5, the cylinders 13 are operated to cause the pins 11 to project into the cavity 21 of the lower mold 2. This reduces the volume of the cavity 21 of the lower mold 2, thereby offsetting a greater amount of shrinkage in the thicker end portion Pt of the layered prereg P, thereby making delamination unlikely to occur in the end portion Pt of the layered prereg P.

Here, even if slight delamination occurs in the end portion Pt of the layered prepreg P, the delamination disappears by bringing the distal end faces of the pins 11 into contact with the end face Pf in the middle Po of the thickness of the layered prereg. Although this causes meandering of fibers in the end portion Pt of the layered prereg, in the middle Po of its thickness, near the end face Pf, such meandering of fibers does not matter because it occurs within a surplus portion in the end portion Pt of the layered prereg P to be cut off by machining after molding (portion to the right side of a two-dot chain line in FIG. 1).

Thus, in the molding apparatus 1, in order to mold a composite fan blade without producing delamination in an end portion Pt of layered prereg P, it is not required that a certain time after cooling of the end portion Pt is started, cooling of the other part of the layered prereg P be started, and thus, an increase in molding time is avoided.

Further, the molding apparatus 1 is configured such that the pins 11 are restrained as necessary by the cylinders 13 not to project from the insertion holes 22a in the cavity wall 22, and thus, usable to mold a fiber reinforced composite member from layered prereg without a significant thickness difference over the whole.

In the described embodiment, the pins 11 are provided as a pressure application device moving into or out of the cavity 21, where the pins 11 are inserted in insertion holes 22a arranged along the width of the cavity 22 (in the vertical direction in the diagram of FIG. 3). The configuration is however not restricted to this.

In the described embodiment, the pins 11 are fixed to a pin support 12 and moved into and out of the cavity 21 as an integrated whole by two cylinders 13 moving the pin support 12. The configuration is however not restricted to this.

In an alternative configuration, an increased number of pin supports 12 and cylinders 13 may be provided to move the individual pins 11 or groups of several pins at staggered times or with different strokes.

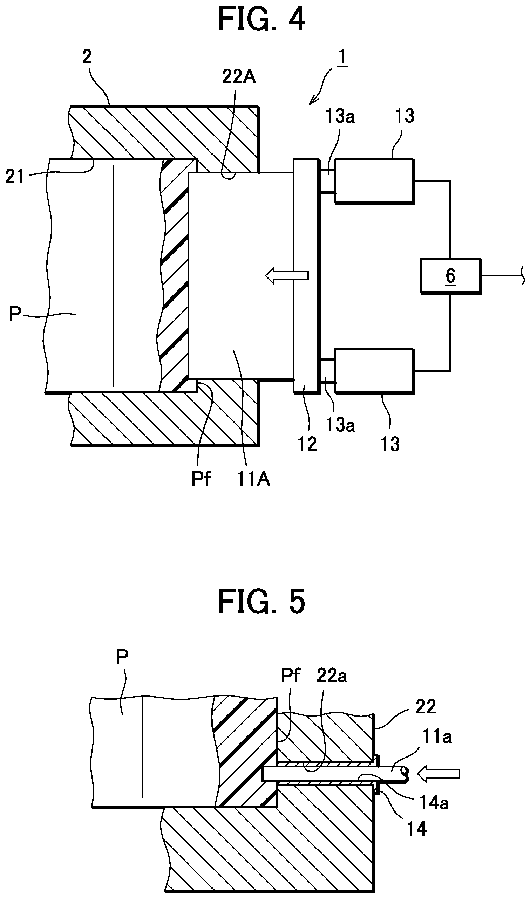

In another alternative configuration, a plate 11A inserted in an insertion hole 22A in the cavity wall 22 as shown in FIG. 4 may be provided as a pressure application device. During cooling of the thermoplastic resin, this can reduce the volume of the cavity 21 of the lower mold 2 to a great degree as compared with the pins 11.

Also this configuration may be altered such that a plurality of plates 11A are provided and that the individual plates 11A or groups of several plates are moved by cylinders 13 at staggered times or with different strokes.

In the described embodiment, the pins 11 are directly inserted in the insertion holes 22a in the cavity wall 22. The configuration is however not restricted to this. In an alternative configuration, a sleeve 14 with a hole 14a may be fitted in each insertion hole 22a as shown in FIG. 5. This enables use of pins 11a with a small diameter as compared with the pins 11, and thus, makes it possible to apply pressure to the end face Pf in the middle Po of the thickness of the layered prereg, in a more locally-restricted manner.

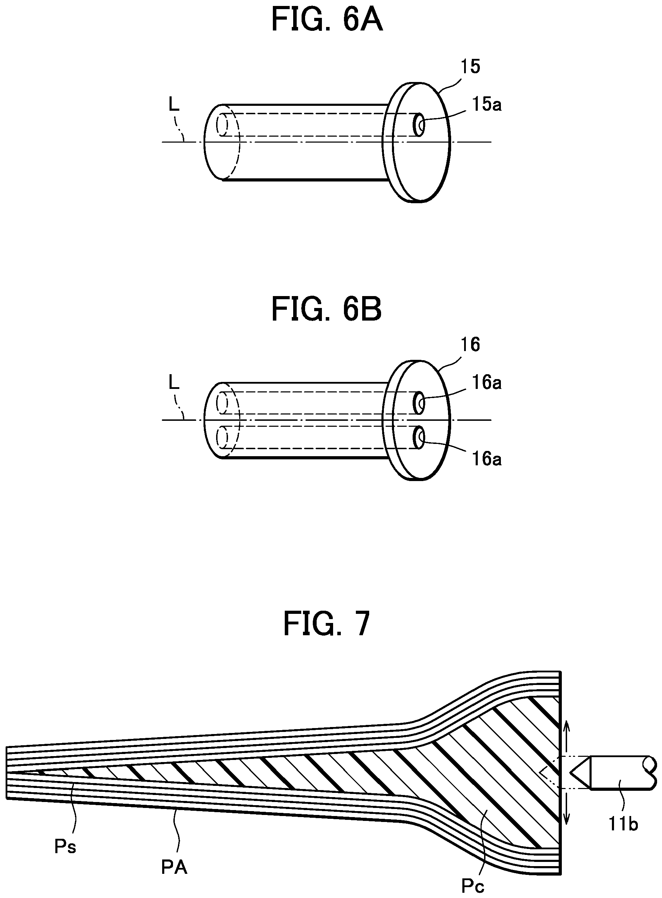

Here, in place of the sleeve 14, a sleeve 15 with a hole 15a running off the axis L as shown in FIG. 6A or a sleeve 16 with two holes 16a, 16a arranged to opposite sides of the axis L may be used.

The use of the sleeve 15 with a hole 15a running off the axis L enables alternation of the location at which pressure is applied. The use of the sleeve 16 with two holes 16a, 16a makes it possible to apply pressure to the layered prereg P at two thickness-wise separated locations simultaneously.

In the described embodiment, the fiber reinforced composite member (composite fan blade) is molded from a plurality of sheets of prepreg formed of long carbon fibers impregnated with resin, stacked such that sheets with different fiber orientations form alternate layers. The layered prereg is however not restricted to this. As shown in FIG. 7, a fiber reinforced composite member may be molded from layered prepreg PA comprising a surface Ps consisting of stacked sheets of prepreg containing long carbon fibers as in the described embodiment and a core Pc preliminarily molded from, for example chopped pieces of prepreg (prereg cut into several dozen-mm rectangles). The core Pc may be preliminarily molded from resin containing short fibers (in the shape of pellets) or resin (which may contain lighter materials such as glass balloons).

When the layered prepreg contains a core Pc preliminarily molded from, for example chopped pieces of prereg, it is desirable that pins 11b with a pointed head be provided as a pressure application device. In this case, when applying pressure to the core Pc by the pins 11b, the pointed head of each pin 11b goes into the end portion of the core Pc and pushes the core outward as indicated by imaginary lines. This can increase the adhesion between the core Pc and the surface Ps.

In the fiber reinforced composite member molding apparatus according to this disclosure, resins usable as a matrix to form prepreg include thermoplastic resins such as PEEK (polyether ether ketone resin), PEI (polyetherimide resin) and PIXA (thermoplastic polyimide resin), and thermosetting resins such as epoxy resin, phenol resin and polyimide resin.

Although in the described embodiment, the fiber reinforced composite member to be molded is a composite fan blade, it is not restricted to this.

A first aspect according to this disclosure is a fiber reinforced composite member molding apparatus comprising a first mold with a cavity, a second mold for clamping layered prepreg including stacked sheets of prepreg formed of long carbon fibers impregnated with resin, to the cavity of the first mold and applying pressure to the layered prepreg, heat sources for heating the resin contained in the layered prepreg via the first and second molds, and a cooling mechanism for cooling the resin contained in the layered prepreg via the first and second molds after heating of the resin contained in the layered prepreg, the first and second molds being brought nearer to each other during cooling with the cooling mechanism, wherein the fiber reinforced composite member molding apparatus further comprises a pressure application device moved into and out of the cavity of the first mold to come into and out of contact with the layered prepreg, a pressure application device driver for moving the pressure application device into and out of the cavity of the first mold, and a controller for operating the pressure application device driver according to shrinkage of the resin contained in the layered prereg caused by cooling with the cooling mechanism to cause the pressure application device to project into the cavity of the first mold to come into contact with and apply pressure to the layered prepreg.

In the fiber reinforce composite member molding apparatus according to the first aspect in this disclosure, during cooling of the resin contained in the layered prereg with the cooling mechanism, the pressure application device driver causes the pressure application device to project into the cavity of the first mold to come into contact with and apply pressure to the layered prereg. The projection of the pressure application device reduces the volume of the cavity of the first mold, thereby offsetting a greater amount of shrinkage in a thicker portion of the layered prereg. Further, the pressure application device in contact with the layered prereg makes delamination unlikely to occur in the layered prepreg.

Thus, in the fiber reinforce composite member molding apparatus, in order to mold a fiber reinforced composite member without producing delamination in layered prepreg, it is not required that a certain time after cooling of a thicker portion of the layered prereg is started, cooling of the other part be started, and thus, an increase in molding time is avoided.

In a second aspect according to this disclosure, a cavity wall defining the cavity of the first mold has an insertion hole for inserting the pressure application device, and the pressure application device is restrained as necessary by the pressure application device driver not to project from the insertion hole into the cavity of the first mold.

The fiber reinforced composite member molding apparatus according to the second aspect in this disclosure is configured such that the pressure application device is restrained as necessary by the pressure application device driver not to project from the insertion hole into the cavity of the first mold, and thus, usable to mold a fiber reinforced composite member from layered prepreg without a significant thickness difference over the whole.

In a third aspect according to this disclosure, the pressure application device comprises a pin.

In the fiber reinforced composite member molding apparatus according to the third aspect in this disclosure, pressure can be applied to the layered prereg in a locally-restricted manner.

In a fourth aspect according to this disclosure, the pin is inserted in the insertion hole in the cavity wall with a sleeve interposed between the pin and the insertion hole.

In the fiber reinforced composite member molding apparatus according to the fourth aspect in this disclosure, the pin with a small diameter can be used as compared with when the sleeve is not used, which means that pressure can be applied to the layered prereg in a more locally-restricted manner.

In a fifth aspect according to this disclosure, the pressure application device comprises a plate.

In the fiber reinforced composite member molding apparatus according to the fifth aspect in this disclosure, during cooling of the resin contained in the layered prereg with the cooling mechanism, the plate can reduce the volume of the cavity of the first mold to a great degree as compared with the pin.

A sixth aspect according to this disclosure is a fiber reinforced composite member molding method for molding a fiber reinforced composite member by clamping layered prepreg including stacked sheets of prepreg formed of long carbon fibers impregnated with resin between a first mold with a cavity and a second mold and applying pressure to the layered prepreg while heating the resin contained in the layered prereg via the first and second molds, and then cooling the resin contained in the layered prepreg via the first and second molds while bringing the first and second molds nearer to each other, wherein a pressure application device is caused to project into the cavity of the first mold according to shrinkage of the resin caused by cooling of the resin contained in the layered prereg to come into contact with and apply pressure to the layered prepreg.

In the fiber reinforced composite member molding method according to the sixth aspect in this disclosure, even when layered prereg is greater in thickness in an end portion than in the other part, a fiber reinforced composite member can be molded without producing delamination in the end portion of the layered prereg, and that without an increase in molding time.

### Explanation of Reference Signs

1 Fiber reinforced composite member molding apparatus
2 Lower mold (first mold)
3 Upper mold (second mold)
4 Cartridge heater (heat source)
5 Cooling medium passage (cooling mechanism)
6 Controller
11, 11a, 11b Pin (pressure application device)
11A Plate (pressure application device)
13 Cylinder (pressure application device driver)
21 Cavity
22 Cavity wall
22a, 22A Insertion hole
31 Core
P, PA Layered prereg (to be molded into a fiber reinforced composite member)

## Claims

1. A fiber reinforced composite member molding apparatus for molding a fiber reinforced composite member, comprising:
a first mold with a cavity,
a second mold for clamping layered prepreg including stacked sheets of prepreg formed of long carbon fibers impregnated with resin, to the cavity of the first mold and applying pressure to the layered prepreg,
heat sources for heating the resin contained in the layered prepreg via the first and second molds, and
a cooling mechanism for cooling the resin contained in the layered prepreg via the first and second molds after heating of the resin contained in the layered prepreg,
the first and second molds being brought nearer to each other during cooling with the cooling mechanism, wherein
the fiber reinforced composite member molding apparatus further comprises a pressure application device moved into and out of the cavity of the first mold to come into and out of contact with the layered prepreg,
a pressure application device driver for moving the pressure application device into and out of the cavity of the first mold, and
a controller for operating the pressure application device driver according to shrinkage of the resin contained in the layered prereg caused by cooling with the cooling mechanism to cause the pressure application device to project into the cavity of the first mold to come into contact with and apply pressure to the layered prepreg.

2. The fiber reinforced composite member molding apparatus according to claim 1, wherein a cavity wall defining the cavity of the first mold has an insertion hole for inserting the pressure application device, and the pressure application device is restrained as necessary by the pressure application device driver not to project from the insertion hole into the cavity of the first mold.

3. The fiber reinforced composite member molding apparatus according to claim 2, wherein the pressure application device comprises a pin.

4. The fiber reinforced composite member molding apparatus according to claim 3, wherein the pin is inserted in the insertion hole in the cavity wall with a sleeve interposed between the pin and the insertion hole.

5. The fiber reinforced composite member molding apparatus according to claim 2, wherein the pressure application device comprises a plate.

6. A fiber reinforced composite member molding method for molding a fiber reinforced composite member by clamping layered prepreg including stacked sheets of prepreg formed of long carbon fibers impregnated with resin between a first mold with a cavity and a second mold and applying pressure to the layered prepreg while heating the resin contained in the layered prereg via the first and second molds, and then cooling the resin contained in the layered prepreg via the first and second molds while bringing the first and second molds nearer to each other, wherein
a pressure application device is caused to project into the cavity of the first mold according to shrinkage of the resin caused by cooling of the resin contained in the layered prereg to come into contact with and apply pressure to the layered prepreg.
